# EUROPÄISCHE PATENTANMELDUNG

(11) **EP 0 743 291 A1**
(43) Veröffentlichungstag der Anmeldung: **20.11.1996**
(21) Anmeldenummer: 96107883.9
(22) Anmeldetag: 17.05.1996
(51) Int. Cl.: C04B 35/628

(54) **Verfahren zur Herstellung von beschichteten Keramikfasern, beschichteten Keramik-Gelegen oder -Vliesen und deren Verwendung**

(30) Priorität: 18.05.1995 DE 19518325
(71) Anmelder: Wacker-Chemie GmbH, D-81737 München (DE)
(72) Erfinder: Geisberger, Gilbert, Dr., 84503 Altötting (DE); Rösch, Lutz, Prof. Dr., 84489 Burghausen (DE)
(74) Vertreter: Potten, Holger

(57) **Zusammenfassung**

Die Erfindung betrifft Verfahren zur Herstellung von beschichteten Keramikfasern, beschichteten Keramikfaser-Gelegen oder -Vliesen, dadurch gekennzeichnet, daß Grünfasern in an sich bekannter Weise hergestellt werden, mit mindestens einem Coating Precursor beschichtet werden und anschließend pyrolisiert werden.

## Beschreibung

Die Erfindung betrifft Verfahren zur Herstellung von beschichteten Keramikfasern, beschichteten Keramikfaser-Gelegen oder -Vliesen und deren Verwendung.

Keramische Fasern werden hauptsächlich zur Herstellung von Verbundwerkstoffen verwendet. Die Verstärkungswirkung durch die Fasern (Pullout-Effekt) und z.T. die Oxidationsbeständigkeit werden erhöht, wenn beschichtete Fasern eingesetzt werden.

Die Beschichtungen werden auf die Fasern über einen CVD-Prozeß (chemical vapour deposition) aufgetragen, indem auf keramisierte Fasern bei ca. 1100°C die gewünschten Materialien abgeschieden werden. (Siehe beispielsweise "Fiber reinforced ceramic composites: materials, processing and technology" herausgegeben von K.S. Mazdiyasni, 1990 S.431, 448, 449)

Nachteiligerweise sind die bekannten Verfahren zur Erzeugung von beschichteten Keramikfasern durch die zwei energieintensiven Pyrolyseschritte teuer. Zudem können bei CVD Prozessen über 1000°C in den Keramikfasern selbst Veränderungen auftreten, die beispielsweise dazu führen können, daß sich die mechanischen Eigenschaften wie die Zugfestigkeit oder das E-Modul verschlechtern (siehe beispielsweise Composites Science and Technology 37 (1990), 55-61, D.B. Fischbach & P.M. Lemoine).

Die vorliegende Erfindung betrifft Verfahren zur Herstellung von beschichteten Keramikfasern, beschichteten Keramikfaser-Gelegen oder -Vliesen, dadurch gekennzeichnet, daß Grünfasern in an sich bekannter Weise hergestellt werden, mit mindestens einem Coating Precursor beschichtet werden und anschließend pyrolysiert werden.

Das erfindungsgemäße Verfahren ermöglicht die Herstellung beschichteter Keramikfasern zu deutlich niedrigeren Preisen, da statt zwei nur ein energieintensiver Pyrolyse-Schritt notwendig ist. Zudem kann es bei dem erfindungsgemäßen Verfahren nicht zu nachteiligen Veränderungen der mechanischen Eigenschaften der Keramikfasern kommen.

Überraschend wurde gefunden, daß mit dem erfindungsgemäßen Verfahren beschichtete Fasern mit glatten Oberflächen (REM-Aufnahmen) also ohne Risse in der Beschichtung, erhalten werden, wenn während der Pyrolyse ein gleichmäßiger Schrumpf beider Precursor-Materialien (Grünfaser und Coating) und ein störungsfreies Diffundieren der Pyrolysespaltprodukte durch die Coating-Schicht gewährleistet ist.

Die Erfindung betrifft daher auch beschichtete Keramikfasern, beschichtete Keramikfasergelege oder -Vliese, die nach dem erfindungsgemäßen Verfahren hergestellt worden sind.

Die erfindungsgemäßen, beschichteten Keramikfasern, Gelege oder Vliese sind dadurch gekennzeichnet, daß die Keramikfasern aus mindestens einem Material bestehen, das durch Pyrolyse von Grünfasern erhalten werden kann und die Beschichtung aus mindestens einem Material besteht, dessen Precursor sich auf die Grünfaser auftragen läßt und das nach der Pyrolyse eine geschlossene Schicht ausbildet.

Bevorzugt bestehen die Keramikfasern aus Siliciumcarbid, Siliciumnitrid, Siliciumoxynitrid, Siliciumoxycarbid und/oder Siliciumcarbonitrid und haben einen Si-Gehalt von 35 bis 70 Gew.-%, einen C-Gehalt bis 40 Gew.-%, einen N-Gehalt bis 40 Gew.-% und einen O-Gehalt bis 40 Gew.-%, wobei ggf. weitere Elemente z.B. B, Al oder Ti bis zu 15 Gew.-% enthalten sein können.

Bevorzugt bestehen die Beschichtungen aus Kohlenstoff, Bornitrid, Siliciumcarbid, Siliciumoxid, Siliciumoxycarbid, Siliciumcarbonitrid und/oder Siliciumnitrid.

Besonders bevorzugt besteht das Fasermaterial der beschichteten Keramikfasern aus Siliciumcarbonitrid mit einem Si-Gehalt von vorzugsweise 50-55 Gew.-%, einem C-Gehalt von vorzugsweise 15 bis 25 Gew.-%, einem N-Gehalt von vorzugsweise 10 bis 25 Gew.-%, und einem O-Gehalt von vorzugsweise kleiner 15 Gew.-%, wobei ggf. weitere Elemente z.B. B oder Al bis zu 3 Gew.-% vorhanden sein können, und die Beschichtung der Keramikfaser aus Pyro-Kohlenstoff.

Die Keramikfasern weisen vorzugsweise einen Durchmesser von 5 bis 500 µm auf, besonders bevorzugt 8-25 µm. Die Beschichtungen weisen eine Dicke von vorzugsweise bis zu 2 µm, besonders bevorzugt 0,02 bis 0,2 µm auf.

Die Ausgangsstoffe der Keramikfasern sind Precursoren, die durch einen Spinnprozeß in Grünfasern überführt werden können. Geeignet sind beispielsweise Si-organische Polymere wie Polysilane, Polycarbosilane oder Polysilazane. Beispiele für solche Polymere sind beispielsweise aus US 5166287, US 5250646 oder US 5268496 bekannt.

Bevorzugt werden Si-organische Polymere mit einem Molekulargewicht von 200 bis 500 000, besonders bevorzugt mit einem Molgewicht von 800 bis 20 000 g/mol und solche mit einem Schmelzpunkt zwischen 100 und 200°C eingesetzt. Solche Polymere sind beispielsweise aus US 5166287 oder US 5268496 bekannt.

Die Ausgangsstoffe der Beschichtungen sind Coating Precursoren, die sich in Substanz oder in Lösung auf die Grünfasern auftragen lassen und nach der Pyrolyse eine geschlossene Schicht auf der Keramikfaser ausbilden. Als Coating Precursoren geeignet sind z.B. organische Polymere wie Polyacrylnitril oder Polyacrylsäure, die nach der Pyrolyse eine PyroKohlenstoffschicht ergeben, oder Bor-Stickstoff-Verbindungen wie Polyborazine, die nach der Pyrolyse eine BN-Schicht ergeben, oder Si-organische Polymere wie Polycarbosilane, die nach der Pyrolyse eine SiC-Schicht ergeben, oder Polysiloxane, die nach der Pyrolyse eine SiO₂-Schicht ergeben oder Polyssilazane, die nach der Pyrolyse eine Si₃N₄-Schicht ergeben, oder Mischungen dieser Coating Precursoren.

Alle möglichen Kombinationen Grünfaser/Coating-Precursor sind möglich, z.B. die Beschichtung einer Polyacrylnitril-Faser mit einem Polycarbosilan, so daß nach der Pyrolyse eine SiC-beschichtete Carbonfaser resultiert. Bevorzugt sind die Kombinationen, bei denen Si-organische Grünfasern, hergestellt aus den in US 5166287 oder US 5268496 beschriebenen Polymeren, mit Polyacrylnitril oder Polyacrylsäure beschichtet werden, so daß Pyro-Kohlenstoff beschichtete Siliciumcarbid- oder Siliciumcarbonitridfasern erhalten werden.

Es ist ferner möglich, mehrere Beschichtungen auf eine Grünfaser aufzutragen, z.B. die Beschichtung einer bereits mit Polyacrylnitril beschichteten Polysilazanfaser mit einem Polycarbosilan, so daß nach der Pyrolyse eine SiC/C- beschichtete Siliciumcarbonitridfaser resultiert.

Die Herstellung der Grünfasern kann auf jede aus dem Stand der Technik bekannte Art und Weise erfolgen. Beispielsweise wird ein aufgeschmolzenes Si-organisches Polymer durch Mehrlochdüsen mit einem Lochdurchmesser von 100 bis 400 µm, besonders bevorzugt mit einem Lochdurchmesser von 300 µm mit einem Druck von vorzugsweise 5 bis 100 bar besonders bevorzugt 10 bis 50 bar gepreßt und die austretenden Grünfasern durch Aufwicklung auf Spulen verstreckt.

Wenn der Coating-Precursor oder dessen Lösung diese unvernetzten und in der Regel in organischen Lösungsmitteln löslichen Grünfasern nicht anlösen, kann der Coating-Precursor oder dessen Lösung vor der Aufwicklung aufgetragen werden. Falls die Grünfasern angelöst werden, müssen diese zunächst durch Vernetzung unlöslich gemacht werden.

Die Vernetzung, d.h. das Unschmelzbarmachen der Grünfasern, der Polymerfaservliese und Gelege vor der Pyrolyse, ist abhängig vom Silicium-organischen Ausgangspolymer und der gewünschten Elementarzusammensetzung nach der Pyrolyse. Sauerstoffhaltige Keramikfasern, Vliese und Gelege werden erzeugt, indem zur Vernetzung der Fasern Sauerstoff oder Feuchtigkeit verwendet werden, d.h. die Vernetzung z.B. durch Tempern an Luft erfolgt (H. Ichikawa, H. Teranishi, T. Ichikawa, J. of Mat. Sci. Let. 6 (1987) 420-422). Sauerstofffreie Fasern, Vliese und Gelege lassen sich herstellen, indem zur Vernetzung beispielsweise Elektronenstrahlen verwendet werden. Entsprechende Verfahren sind beispielsweise in K. Okamura, M. Sato, T. Matsuzawa, T. Seguchi, S. Kawanishi, Ceram. Eng. Sci. Proc. 9 (1988) 909-918, beschrieben. Für die jeweiligen Polymertypen sind in der Literatur (z.B. J. Lipowitz; Ceramic Bulletin 70 (1991) 1888-1894) weitere Vernetzungsmethoden beschrieben, die ebenfalls angewendet werden können.

Der Coating-Precursor oder dessen Lösung kann durch Tauchen oder Besprühen der Grünfasern oder besonders bevorzugt an einem Fadenführer, den die Grünfasern durchlaufen, mit angeschlossener Dosierpumpe aufgetragen werden. Die Menge an Coating-Precursor richtet sich nach der zu beschichtenden Grünfaser-Menge, dem Grünfaser-Durchmesser, dem Schrumpf der Grünfaser und des Coating-Precursors bei der Pyrolyse und der gewünschten Beschichtungsdicke auf der pyrolysierten Faser.

Die Pyrolyse der beschichteten Grünfasern erfolgt diskontinuierlich oder kontinuierlich bei Maximaltemperaturen von 600 bis 2000°C, bevorzugt 1000 bis 1500°C, besonders bevorzugt 1100 bis 1300°C und einer Verweilzeit von vorzugsweise 0,5 bis 1000 min, besonders bevorzugt 1 bis 10 min. unter Inertgas (z.B. Argon oder unter 1500°C auch Stickstoff).

Die Aufheiz- und Abkühlraten liegen vorzugsweise bei mindestens 5 K/h, besonders bevorzugt zwischen 5 und 1000 K/min. Sie können verschieden sein. Während der Aufheiz- und Abkühlphase sind Haltezeiten möglich.

Bei dem bevorzugten Verfahren werden vernetzte Grünfasern aus Si-organischen Polymeren in eine Lösung von Polyacrylnitril (bevorzugt 0,1 bis 5%) in Dimethylformamid getaucht und anschließend unter Inertgas bis max. 1500°C pyrolysiert. Die Pyrolyse kann diskontinuierlich in Faserstücken oder kontinuierlich, indem nach dem Tauchvorgang die Grünfaserbündel direkt durch einen inertisierten Rohrofen geleitet werden, zur Herstellung von Endlosfasern erfolgen.

Bei dem besonders bevorzugten Verfahren durchlaufen Grünfasern aus Si-organischen Polymeren nach dem Spinnvorgang vor der Aufwicklung einen Fadenführer, in dem über eine Dosierpumpe eine bestimmte Menge (bevorzugt 5 bis 30 Gew.-% bezogen auf die Grünfaser-Menge) einer wäßrigen Lösung von Polyacrylsäure (bevorzugt 0,01 bis 2 Gew.-%) aufgetragen wird. Nach ausreichender Vernetzung, z.B. bei Polysilazangrünfasern durch Lagern an Luft (Hydrolyse mit Luftfeuchtigkeit) erfolgt die Pyrolyse unter Inertgas bis max. 1500°C. Die Pyrolyse kann diskontinuierlich in Faserstücken oder kontinuierlich, indem die Grünfaserbündel von den Spulen abgewickelt und durch einen Rohrofen geleitet werden, zur Herstellung von Endlosfaser erfolgen.

Die Herstellung von Keramikfasergelegen oder -Vliesen erfolgt, indem Precursoren zu Grünfasern versponnen, diese zu Gelegen oder Vliesen abgelegt, verfestigt unschmelzbar gemacht und abschließend pyrolysiert werden.

Beim bevorzugten Verfahren ist die Ablage als Vlies dem Spinnprozeß, bei dem die Verstreckung der Grünfasern durch eine Injektordüse erfolgt, direkt nachgeschaltet. Die auf Spulen aufgewickelten Grünfasern müssen in einem weiteren Schritt zu Gelegen, z.B. in Parallellagen oder Kreuzlagen, abgelegt werden.

Um den Zusammenhalt der Einzelfasern in einem Vlies oder Gelege zu gewährleisten, müssen die Fasern an den Berührungsstellen aneinanderhaften. Diesen Schritt der Verfestigung des Faservlieses oder Fasergeleges kann man in an sich bekannter Weise beispielsweise durch thermisches Verschweißen, durch Anlösen mittels eines Lösungsmittels oder durch ein zusätzliches Bindemittel erreichen.

Beim thermischen Verschweißen zur Herstellung der Vliese oder Gelege werden die vorzugsweise frisch versponnenen Polymerfasern soweit aufgeheizt, daß sie an den Kontaktstellen zusammenkleben. Dazu werden die Fasern maximal bis 10° über die Erweichungstemperatur des Polymers aufgeheizt, um ein Zerfließen der Fasern zu vermeiden. Vorzugsweise wird dieses Verfahren unter Preßdruck von vorzugsweise 1 bis 200 mbar besonders bevorzugt bei 3 bis 10 mbar durchgeführt.

Gemäß einem anderen Verfahren zur Herstellung der Vliese und Gelege erfolgt das thermische Verschweißen mit unvollständig vernetzten Grünfaservliesen oder -gelegen. Die Grünfasern müssen dabei soweit vernetzt sein, daß sie beim Aufheizen nicht ihre Faserform verlieren, jedoch an den Faseroberflächen noch plastisch werden, so daß sie unter Druck an den Berührungsstellen zusammenkleben. Vorzugsweise erfolgt anschließend, wie bereits oben beschrieben, eine weitere Vernetzung, um eine ausreichende Vernetzung für die anschließende Pyrolyse zu erreichen.

Eine weitere bevorzugte Möglichkeit zur Verfestigung der Fasern besteht darin, frisch versponnene Polymerfasern nach der Ablage als Vlies oder Gelege mit Lösungsmittel zu besprühen, so daß sich die Faseroberflächen anlösen und beim Verdampfen des Lösungsmittels an den Kontaktstellen aneinanderhaften. Dazu geeignete Lösungsmittel sind vorzugsweise Lösungsmittel oder Lösungsmittelgemische mit einem Siedepunkt bzw. Siedebereich von bis zu 120° C bei 0,1 MPa. Beispiele für solche Lösungsmittel sind Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, oder Gemische dieser Lösungsmittel.

Auch bei diesem Verfahren ist vor der Pyrolyse eine ausreichende Vernetzung der Fasern notwendig. Diese kann, wie bereits oben beschrieben, erreicht werden.

Bei allen beschriebenen Verfestigungsmethoden lassen sich die Anzahl der aneinanderhaftenden Kontaktstellen, und deren Festigkeit mittels allgemein bekannter Verfahren steuern. Je mehr aneinanderhaftende Kontaktstellen vorhanden sind, um so fester jedoch weniger flexibel ist das resultierende Si-keramische Vlies bzw. das Si-keramische Gelege.

Die erfindungsgemäßen, beschichteten Keramikfaser-Gelege oder -Vliese lassen sich herstellen, indem entweder die verfestigten Gelege oder Vliese aus unvernetzten oder vernetzten Grünfasern mit dem Coating-Precursor oder dessen Lösung besprüht, oder beim Spinnvorgang der Coating-Precursor oder dessen Lösung vor der Grünfaserablage und Verfestigung aufgetragen werden.

Die beschichteten Grünfaser-Gelege oder -Vliese werden bei Temperaturen von 600°C bis zu 2000°C, bevorzugt 1000°C bis 1500°C, besonders bevorzugt 1100°C bis 1300°C und einer Verweilzeit von 0,5 bis 1000 min, besonders bevorzugt 1 bis 10 min. unter Inertgas pyrolysiert. Dabei kommt es zu einem deutlichen Schrumpf der Vliese und Gelege. Geeignete Inertgase sind beispielsweise Argon oder Stickstoff.

Vorzugsweise werden die beschichteten Grünfaservliese oder Gelege während der Pyrolyse mit einem Gewicht belastet, um möglichst dünne Vliese oder Gelege zu erhalten.

Die erfindungsgemäßen beschichteten Keramikfasern, Keramikfaser-Vliese oder Keramikfaser-Gelege lassen sich unter anderem in Verbundkörpern zur Verstärkung von Keramiken, Glaskeramiken, Metallen, Gläsern und Kunststoffen einsetzen. Weiterhin finden diese Keramikfasern in Form von Geweben, die Vliese oder Gelege als Filter z.B. in der Abgastechnik, als Träger (z.B. für Katalysatoren) oder als Isoliermaterial Verwendung.

Die folgenden Beispiele dienen der weiteren Erläuterung der Erfindung:

### Beispiel 1

600 g eines gemäß Beispiel 2 der US-5268496 bei 105°C schmelzenden Polysilazans wurde an einem Einschneckenextruder bei einem Durchsatz von 180 g/h über eine 50-Lochdüse zu 20 µm dicken Grünfasern versponnen und auf Spulen aufgewickelt (175 m/min). Zur Vernetzung wurden die Spulen 2 Tage an Luft gelagert. Anschließend wurden die Grünfaserbündel von den Spulen abgewickelt, durch eine 2,5%ige Lösung von Polyacrylnitril (Pulver der Fa. Hoechst, 93309 Kelheim, Chargen-Nr. 90112-4) in Dimethylformamid gezogen und in Form von 20 cm langen Faserstücken in einem Kammerofen (in 30 min. auf 1300°C, Verweilzeit 30 min.) unter Argon pyrolysiert. Die C-beschichteten Siliciumcarbonitridfasern wiesen folgende elementare Zusammensetzung auf: Si 54 Gew.-%, C 18 Gew.-%, N 16 Gew.-% und O 9 Gew.-%. Der Filamentdurchmesser betrug 15 µm, die Zugfestigkeit 1,5 GPa und der E-Modul 180 GPa. REM-Aufnahmen zeigten rißfreie Faser-Oberflächen.

### Beispiel 2

600 g eines gemäß Beispiel 9 der DE 3809614 hergestellten Polysilazans wurde an einem Einschneckenextruder bei einem Durchsatz von 180 g/h über eine 50-Lochdüse zu 20 µm dicken Grünfasern versponnen und vor der Aufwicklung auf Spulen an einem Fadenführer mit angeschlossener Dosierpumpe 30 ml/h eine 0,25%igen Lösung von Polyacrylsäure (erhältlich als 25%ige Lösung in Wasser von der Fa. Aldrich-Chemie, 89555 Steinheim, Best.-Nr. 19, 205-8) in Wasser aufgetragen. Nach einer Woche Lagern an Luft waren die Grünfasern unschmelzbar, woraufhin die gespreiteten Grünfasern bei einer Maximaltemperatur von 1300°C unter Argon (Verweilzeit 2 min.) durch einen Rohrofen gezogen wurden. Es resultierten C-beschichtete Siliciumcarbonitrid-Endlosfasern mit einem Si-Gehalt von 54 Gew.-%, C-Gehalt von 17 Gew.-%, N-Gehalt von 10 Gew.-% und O-Gehalt von 17 Gew.-%. Der Filamentdurchmesser betrug 15 µm. Auf REM-Aufnahmen waren glatte Faser-Oberflächen ohne Risse erkennbar.

### Beispiel 3

Analog Beispiel 1 hergestellte Polysilazan-Grünfasern wurden nach 2-tägiger Vernetzung an Luft und Tauchen in der 2,5%igen Lösung von Polyacrylnitril in Dimethylformamid in 15 cm lange Stücke geschnitten und gitterförmig (300 g/m²) in einer Keramikschale abgelegt. Das Gelege wurde in einem Kammerofen bis 1200°C (Aufheizrate 300 K/h) unter Drucklast (4 mbar, aufgebracht durch aufgelegte Quarzplatten) 5 h in einem Stickstoff-Strom pyrolysiert. Durch die größere Polyacrylnitril-Menge haften die Fasern an den Kontaktstellen aneinander. Der Flächenschrumpf des Vlieses betrug ca. 25%, so daß ein Vlies mit einem Flächengewicht von 310 g/m² bei einer Dicke von 1 mm resultierte.

### Beispiel 4

Um die Wirkung der Grünfaser-Beschichtung zu testen, wurden von nach Beispiel 2 hergestellten C-beschichteten und unbeschichteten (analog Beispiel 2 ohne Polyacrylsäure) Siliciumcarbonitridfasern Verbundkörper hergestellt, und das Bruchverhalten beurteilt.

Der SiC-Matrix-Precursor wurde hergestellt, indem 250 g Siliciumcarbidpulver NF 0-860 (käuflich erhältlich bei Elektroschmelzwerk Kempten GmbH, München) mit 500 g 50%iger Polysilanlösung in Toluol, 2,5 g Ammoniumstearat und 1,25 g Triolein im Walzwerk 1 Stunde innig vermengt wurden.

Das NF O-860 ist ein α-Siliciumcarbidpulver keramischer Qualität mit einer mittleren Korngröße von etwa 1 mm, das nach dem Acheson-Verfahren hergestellt wurde. Das verwendete Polysilan wurde aus einer Polysilanlösung käuflich erhältlich unter der Bezeichnung SLM 432070 bei Wacker-Chemie GmbH wie folgt hergestellt.
500 ml der Polysilanlösung SLM 432070 wurden mit 250 g Phenyl-Methyl-Polysilan versetzt. Das molare Verhältnis von Methyl zu Methoxy zu Phenyl beträgt beim eingesetzten Phenyl-Methyl-Polysilan 100 : 0,5 : 3,5. Der Erweichungsbereich liegt bei 140°C, das numerische Mittel Mₙ bei 900, das Gewichtsmittel Mw bei 1350. Die Herstellung dieses Polysilans ist z.B. in Z. anorg. allg. Chemie 618 [1992] 148-152 oder CA 118(93) 10 2768) beschrieben. Diese Mischung wurde mit 10 g Borsäure, 250 ml Toluol und 50 g vinylgruppenhaltiges Organopolysiloxan mit einer Viskosität von 80 mm²/s bei 25 °C versetzt. Die Zusammensetzung dieses Polysiloxans beträgt [ViMe₂SiO₁]_{0,23} [ViMeSiO_{2/2}]_{0,27} [ViSiO_{3/2}]_{0,50}, wobei Me den Methyl- und Vi den Vinylrest bedeutet. Die Herstellung dieses Polysiloxans ist z.B. in DE-A-4143203 (Wacker-Chemie GmbH) beschrieben.

Der Reaktionsansatz wird unter Stickstoffatmosphäre 8 Stunden unter Rückfluß gekocht. Die abgekühlte Lösung wird ebenfalls unter Inertgasschutz über asbestfreie Filterschichten (käuflich erhältlich unter der Bezeichnung "Supra 2600" bei Fa. Seitz) filtriert und im Rotationsverdampfer bei 100 °C und 1 hPa zur Trockne eingedampft. Das so erhaltene Organopolysiloxan-Vinylsiloxan-Copolymere hat einen Erweichungsbereich von 125°C, ein numerisches Mittel Mₙ von 1500 und ein Gewichtsmittel M_{w} von 6610. Eine 50%ige Lösung in Toluol zeigt bei 185 cpm eine Viskosität von ca. 15 mm²/s. Die keramische Ausbeute bei 1200°C beträgt 53%.

Die C-beschichteten als auch die unbeschichteten Siliciumcarbonitridfasern wurden durch diesen Schlicker gezogen und unter Vakuum von anhaftender Luft befreit und getrocknet. Durch Erhitzen auf 265°C im Vakuum vernetzt das Polysilan zu unschmelzbaren und unlöslichen Hochpolymeren. Die dadurch erhaltenen Rohkörper wurden unter Stickstoff pyrolysiert, um den siliciumorganischen Precursor in ein sauerstoffhaltiges Siliciumcarbid überzuführen. Hierzu wurde zunächst mit einer Aufheizrate von 150°/h bis 350°C erhitzt und so der Vernetzungsvorgang vervollständigt. Die weitere Temperatursteigerung auf 800°C erfolgte mit 30°/h langsamer, um eine Rißbildung zu vermeiden. Im letzten Pyrolyseschritt wurde zur Gefügekonsolidierung mit 150°/h auf 1200°C aufgeheizt, zwei Stunden bei dieser Temperatur belassen und mit 150°/h auf Raumtemperatur abgekühlt.

Die so gebildeten Verbundkörper wurden gebrochen und die Bruchstellen optisch und elektronenoptisch beurteilt. Im Vergleich zu den unbeschichteten Fasern zeigten die C-gecoateten Siliciumcarbonitrid-Fasern einen deutlich ausgeprägteren Pullout-Effekt.

## Patentansprüche

1. Verfahren zur Herstellung von beschichteten Keramikfasern, beschichteten Keramikfaser-Gelegen oder -Vliesen dadurch gekennzeichnet, daß Grünfasern in an sich bekannter Weise hergestellt werden, mit mindestens einem Coating Precursor beschichtet werden und anschließend pyrolysiert werden.

2. Verfahren gemäß Anspruch 1, dadurch gekennzeichnet, daß Si-organische Polymere in an sich bekannter Weise mittels eines Spinnprozesses in Grünfasern überführt werden und auf die so erhaltenen Grünfasern mindestens ein Coating Precursor in Substanz oder in Lösung aufgetragen wird, der nach einer Pyrolyse eine geschlossene Schicht auf der Keramikfaser bildet.

3. Verfahren gemäß Anspruch 1 oder 2, dadurch gekennzeichnet, daß als Coating Precursor mindestens eine Substanz ausgewählt aus der Gruppe organische Polymere, die nach der Pyrolyse eine Pyro-Kohlenstoffschicht ergeben, Bor-Stickstoff-Verbindungen die nach der Pyrolyse eine BN-Schicht ergeben, Si-organische Polymere, die nach der Pyrolyse eine SiC-Schicht ergeben, Polysiloxane, die nach der Pyrolyse eine SiO₂-Schicht ergeben und Polysilazane, die nach der Pyrolyse eine Si₃N₄-Schicht ergeben, verwendet wird.

4. Verfahren gemäß einem oder mehreren der Ansprüche 1 bis 3, dadurch gekennzeichnet, daß die Pyrolyse der beschichteten Fasern, Gelege oder Vliese bei Temperaturen von 600°C bis zu 2000°C, und einer Verweilzeit von 0,5 bis 1000 min, unter Inertgas durchgeführt wird.

5. Verfahren gemäß Anspruch 4, dadurch gekennzeichnet, daß als Inertgase Argon oder Stickstoff eingesetzt wird.

6. Beschichtete Keramikfasern, Keramikfaser-Gelege oder Keramikfaser-Vliese, dadurch gekennzeichnet, daß die Keramikfasern aus mindestens einem Material bestehen, das durch Pyrolyse von Grünfasern erhalten werden kann und die Beschichtung aus mindestens einem Material besteht, dessen Precursor sich auf die Grünfaser auftragen läßt und das nach der Pyrolyse eine geschlossene Schicht ausbildet.

7. Beschichtete Keramikfasern, Keramikfaser-Gelege oder Keramikfaser-Vliese, gemäß Anspruch 6, dadurch gekennzeichnet, daß die Keramikfasern aus Siliciumcarbid, Siliciumnitrid, Siliciumoxynitrid, Siliciumoxycarbid und/oder Siliciumcarbonitrid bestehen und einen Si-Gehalt von 35 bis 70 Gew.-%, einen C-Gehalt bis 40 Gew.-%, einen N-Gehalt bis 40 Gew.-% und einen O-Gehalt bis 40 Gew.-% haben und ggf. weitere Elemente z.B. B, Al oder Ti bis zu 15 Gew.-% enthalten können.

8. Beschichtete Keramikfasern, Keramikfaser-Gelege oder Keramikfaser-Vliese, gemäß Anspruch 6 oder 7, dadurch gekennzeichnet, daß die Beschichtung aus Kohlenstoff, Bornitrid, Siliciumcarbid, Siliciumoxid, Siliciumoxycarbid, Siliciumcarbonitrid und/oder Siliciumnitrid besteht.

9. Beschichtete Keramikfasern, Keramikfaser-Gelege oder Keramikfaser-Vliese, gemäß einem oder mehreren der Ansprüche 6 bis 8, dadurch gekennzeichnet, daß die Keramikfasern einen Durchmesser von 5 bis 500 µm aufweisen und die Beschichtung eine Dicke von bis zu 2 µm, aufweist.

10. Verwendung der beschichteten Keramikfasern, Keramikfaser-Gelege oder Keramikfaser-Vliese gemäß einem oder mehreren der Ansprüche 6 bis 9, in Verbundkörpern zur Verstärkung von Keramiken, Glaskeramiken, Metallen, Gläsern und Kunststoffen oder als Filter z.B. in der Abgastechnik oder als Träger z.B. für Katalysatoren oder als Isoliermaterial.
